# EUROPEAN PATENT SPECIFICATION

(11) **EP 4 622 871 B1**
(45) Date of publication and mention of the grant of the patent: **01.07.2026**
(21) Application number: 23844552.2
(22) Date of filing: 24.10.2023
(51) Int. Cl.: B64D 33/02

(54) **AN AIR VEHICLE**
LUFTFAHRZEUG
VÉHICULE AÉRIEN

(30) Priority: 23.11.2022 TR 202217755
(43) Date of publication of application: 01.10.2025
(73) Proprietor: Tusas- Turk Havacilik Ve Uzay Sanayii Anonim Sirketi, 06980 Ankara (TR)
(72) Inventor: ERDOGAN, Nursev, 06980 Kahramankazan/Ankara (TR); CAKIR, Mustafa Kagan, 06980 Kahramankazan/Ankara (TR); UNAL, Ilhami, 06980 Kahramankazan/Ankara (TR); TUTAR, Mustafa, 06980 Kahramankazan/Ankara (TR); OZBEY, Nurettin, 06980 Kahramankazan/Ankara (TR); USTUN, Cihat Emre, 06980 Kahramankazan/Ankara (TR); KILIC, Nail Bugra, 06980 Kahramankazan/Ankara (TR)
(74) Representative: Berkkam, Ayfer
(86) International application number: PCT/TR2023/051186
(87) International publication number: WO 2024/112291

(56) References cited:
- CN-A- 111 232 227
- DE-C1- 3 713 875
- US-A- 3 509 568
- US-A1- 2015 345 391
- US-B1- 11 434 018

## Description

This invention relates to an air vehicle with a structure for absorbing electromagnetic waves.

A radar absorbing structure and/or a radar absorbing material reflects a small amount of incoming electromagnetic wave within operating frequencies, and converts a large portion of the electromagnetic energy into heat for absorption. Radar absorbing materials (RAM) absorb and reduce the electromagnetic energy reflected back to the radar, thus reducing the radar cross section. Operation of radar absorbing materials is based on impedance matching or attenuation of the electromagnetic wave incident on the material, by utilizing properties of magnetic and dielectric materials. Radar absorbing materials can be used in air, land and sea platforms that crucially require a low radar cross section. Thanks to the use of radar absorbing materials on these platforms, the electromagnetic waves reaching the platform surface are absorbed at a high rate, and target detection range of radar systems can be significantly reduced. Ensuring low radar visibility (radar cross section) is of great importance for the safety of warplanes. Composite materials used in air vehicles are reflective, increasing the radar visibility of air vehicle. Therefore, electromagnetic absorption is achieved by adding nano-materials into composite materials or by using radar absorbing paints. One of the parts in an air vehicle that requires low radar visibility is the air duct. While the air vehicle with a straight air duct is navigating, the curved blades in front of the engine rotate at high speeds, so the electromagnetic wave entering the air duct hits these blades and is scattered back, causing an increase in radar visibility. The electromagnetic wave entering the air duct hits this reflection plane and is reflected back, causing an increase in radar visibility. By applying radar absorbing paints on both the straight and "S" shaped air ducts, radar visibility of the air vehicle is reduced. However, the applied paints deteriorate quickly due to atmospheric factors. In addition, these paints are quite costly and incur maintenance costs.

US11434018, which is included in the known-state of the art, discloses an air inlet device used in an air inlet for an engine that may be used in a supersonic aircraft, such as a military fighter jet. Said document aims to design the air inlet such that the radar visibility of an aircraft is low and the performance of the engine is as high as possible. Direction of the engine blades can be changed depending on the air flow direction.

RU2623031, which is included in the known-state of the art, discloses means for reducing radar visibility of multi-mode aircraft. Total radar visibility in the forward hemisphere of the aircraft is substantially determined by the air intake and engine inlet devices. It reduces the radar signature of the air intake and inlet devices of the aircraft engine. Said structure is designed as anti-radar and anti-infrared grilles that reduce acoustic visibility. US2015345391A1, which is included in the known-state of the art, discloses protective devices for turbine engines that prevent debris from entering the engine and smooth turbulent airflow. The environmental defense shield consists of symmetrical airfoil-shaped fins positioned around and contributing to a plenum space and positioned ahead of a turbine engine. A ring-shaped band stiffener is placed over the fins, projecting forward in decreasing size, the fins merging to form or attaching to a solid nose. The environmental defense shield protects the engine from debris while also smoothing the airflow into the engine.

US3509568A, which is included in the known-state of the art, discloses a lattice of corrugated resistive/conductive attenuator strips joined at adjacent ridge regions and supported by an annular structure for integration with an engine air inlet. Each strip includes terminal electrical busses connected to a power supply for resistive heating, enabling efficient anti-icing without significantly reducing the electromagnetic attenuation performance of the assembly.

An air vehicle according to the present invention provides a structure that both reduces radar visibility and affects aerodynamic performance to a minimum level in an air vehicle.

An object of a preferable embodiment is to size the set structure in an "S" shape such that a distance between the panels creates a flat surface against low-frequency electromagnetic waves, thereby providing both low radar frequency (RF) visibility and passive flow control by developing minimum drag resistance against the flow.

An object of a preferable embodiment is to reduce radar visibility by positioning "S" shaped panel structures horizontally and vertically and thus providing horizontal and vertical polarization in electromagnetic waves.

Yet another object of the present invention is to provide a set structure with a practical, durable and economical radar absorbing structure.

An air vehicle according to the attached independent claim and other dependent claims comprises a body on the air vehicle; at least one air inlet provided as an opening on the body for receiving air into body through an aerodynamic outer surface of the body. There is at least one engine on or inside the body, which generates a power required for the flight of the air vehicle. As an extension of the air inlet, there is at least one air duct extending longitudinally between the air inlet and the engine. The air duct directs the air received from the air inlet that contacts the air first, towards the engine. There are multiple panels within the air duct. The panels move within the air duct and allow absorption of the electromagnetic waves contacting thereon. The air inlet, which is the first part of the body in contact with electromagnetic waves and air, directs the electromagnetic waves and air towards the air duct. A plurality of panels located in the air duct between the air inlet and the engine are designed to both absorb electromagnetic waves and minimize the effects on aerodynamic efficiency.

An air vehicle according to the attached independent claim and other dependent claims comprises at least one structure in a cylindrical form, which is located in the air duct, mirror symmetrical with respect to the center of the air duct, such that they are opposite each other relative to the center. The structure consists of panels positioned such that a distance between the panels located at the center of the air duct or closest to the center of the air duct is greater than a distance between the other panels located away from the center of the air duct. An air section or air flow rate passing between at least two consecutive and opposite panels closest to the center of the air duct is higher than an air flow rate transmitted towards the engine between the consecutive panels closest to the other wall of the air duct. Therefore, an air pressure transmitted towards the engine between the two panels located in the center of the air duct, is less in quantity; because a cross section between two panels located closer to the center of the air duct is larger. A distance between the panels located mirror symmetrically to each other on one side of the center of the air duct can be equal or different. The panels on right and left sides of the center of the air duct are opposite each other, dividing the center of the air duct into two portions and enabling the panels to be located mirror symmetrically.

In an embodiment of the invention, the air vehicle comprises the panel in which a distance between two consecutive panels, which are located at the right or left of the center of the air duct depending on the air flow direction in contact with the air inlet, increases from the wall of the air duct to the center of the air duct and decreases from the center of the air duct to the wall of the air duct, thereby both absorbing electromagnetic waves without contacting the engine, and increasing aerodynamic efficiency. The air duct, which transmits electromagnetic waves from the air inlet to the panels, enables absorption before the electromagnetic waves reach the engine.

The panels located on one side of a diameter line that divides the center of the air duct in half, and the other panels located on the other side of the diameter line opposite each other narrow from the center of the air duct towards the wall of the air duct, and widen from the wall of the air duct towards the center of the air duct.

In an embodiment of the invention, the air vehicle comprises the panel located between the engine and the air inlet, almost parallel to the direction of air flow reaching the air inlet. It comprises the panels enabling movement of air through the air duct between the panels, and arranged sequentially parallel to the air duct between two ends, with one end on the inner wall of the air duct and the other end on the wall of another air duct located opposite the inner wall contacted by the panel. It comprises the panel that is removably attached to the inner wall of the air duct by contacting it at both ends, dividing the air duct into sections.

In an embodiment of the invention, the air vehicle comprises the panels, which are located closest to the center of the air duct, opposite each other mirror symmetrically, gradually widening from the air inlet to the engine. A distance between two panels located opposite each other at the middle of the air duct increases from the air inlet to the engine. Both panels widen from the air inlet towards the engine by approaching the wall of the air duct. In this way, minimum impact on aerodynamic performance is ensured.

In an embodiment of the invention, the air vehicle comprises the panels that are closest to the wall of the air duct and furthest from the center of the air duct, arranged sequentially with each other, and gradually narrowing from the air inlet to the engine to direct the air towards the wall of the air duct. It comprises the panel inclined from the center of the air duct to the wall of the air duct, from the air inlet towards the engine. Therefore, it directs the air by compressing it towards the wall of the air duct, from the air inlet towards the engine. The air flowing between at least two panels located close to the wall of the air duct is compressed between the two panels and directed towards the wall of the air duct.

In an embodiment of the invention, the air vehicle comprises the panels which are arranged sequentially between the center of the air duct and the wall of the air duct, and direct the air from the air inlet towards the engine such that an air flow rate at a part first contacted by the air is almost completely the same with the last part contacted by the air. The air flow rate passing through at least two of the middle panels located between the center of the air duct and the wall of the air duct is almost completely the same in the first and last parts where it passes.

In an embodiment of the invention, the air vehicle comprises the panels arranged sequentially to extend from the wall of the air duct to the center of the air duct. It comprises panels in the form of a rod towards the center of the air duct, covering the entire wall of the air duct at intervals predetermined by the user on the air duct.

In an embodiment of the invention, the air vehicle comprises the panel with a dimension gradually decreasing from the center of the air duct to the wall of the air duct; the structure formed by the panels that are form-compatible with the form of the air duct. The air duct may be in the form of a curved or straight cylinder. The panels within the air duct extend longitudinally from one corner to another within the air duct, in accordance with the shape of the air duct. The panels located at the center of the air duct are larger since their diameter is longer than the other parts, and the panels close to the wall of the air duct are smaller.

In an embodiment of the invention, the air vehicle comprises the panels located horizontally and/or vertically in the air duct depending on the direction of air flow; the structure formed by the panels located almost completely parallel to the air flow direction and/or almost completely perpendicular to the air flow direction. It comprises the structure, which accordingly provides horizontal and vertical polarization and allows electromagnetic absorption at wider angle ranges.

In an embodiment of the invention, the air vehicle comprises at least one dielectric material forming the panel; at least one thin film coated on the dielectric material with a surface resistance almost completely close to an impedance value of air; the panel with Salisbury screen radar absorber design consisting of the dielectric material and the thin film. The thin film can be coated on both surfaces of the dielectric material, remaining between the dielectric material. Radar absorbing material can be designed according to the order of thin film - dielectric material - thin film - dielectric material - thin film.

In an embodiment of the invention, the air vehicle comprises the panels with a thickness decreasing from the air inlet to the engine. Since the panels arranged from the air inlet to the engine have a thickness decreasing towards the engine, the air sent to the engine is directed to affect the aerodynamic performance to a minimum.

In an embodiment of the invention, the air vehicle comprises the panel produced by an additive manufacturing method, so as to be integrated and form-compatible with the air duct. Therefore, a monolithic air duct is provided.

In an embodiment of the invention, the air vehicle comprises the panel removably attached in the air duct. This provides ease of replacement in case of wear.

In an embodiment of the invention, the air vehicle comprises the structure formed by the panels that have an "S" shape, thereby both absorbing electromagnetic waves when they hit many of their surfaces, and affecting aerodynamic performance at minimum.

In an embodiment of the invention, the air vehicle comprises the panel produced suitable for use in fighter jets with jet engines. Thanks to the structure located close to the air inlet, electromagnetic waves are absorbed without contacting the engine propellers in the jet engine.

The air vehicle realized to achieve the object of the present invention is illustrated in the attached drawings, in which:

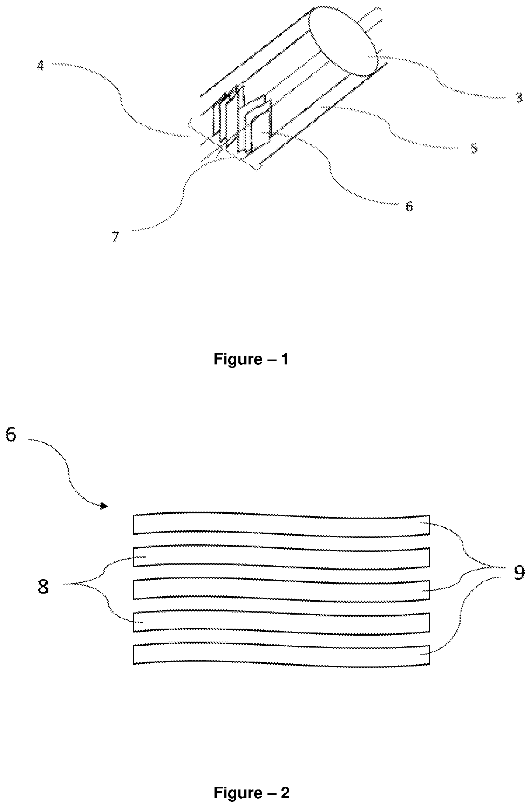

Figure 1 is a perspective view of the air vehicle.
Figure 2 is a schematic view of the panel.

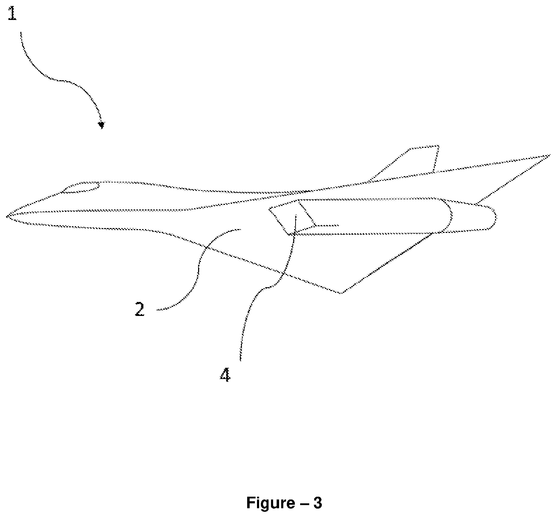

Figure 3 is a perspective view of the air vehicle.

All the parts illustrated in figures are individually assigned a reference numeral and the corresponding terms of these numbers are listed below:
1. Air Vehicle
2. Body
3. Engine
4. Air Inlet
5. Air Duct
6. Panel
7. Structure
8. Dielectric Material
9. Thin Film

The air vehicle (1) comprises a body (2); at least one engine (3) on the body (2) for generating a power required for the flight of the air vehicle; at least one air inlet (4) located as an opening on the body (2) and allowing air entry from the atmosphere; at least one air duct (5) located on the air inlet (4) and transmitting the air received from the air inlet (4) to the engine (3); a plurality of panels (6) with radar absorbing material properties, which are located in the air duct (5) and allow absorption of electromagnetic waves contacting their surfaces (Figure - 1, Figure - 2, Figure - 3).

The air vehicle (1) according to the invention comprises at least one structure (7) in which a distance between the panels (6) that are located in the air duct (5) closest to the center of the air duct (5), opposite each other and mirror symmetrical with respect to the center of the air duct (5), is greater than a distance between other panels (6).

It comprises a body (2) on the air vehicle; at least one engine (3) on the body (2) for generating a power required for the flight of the air vehicle; at least one air inlet (4), e.g. an opening on the body (2), that allows the air coming from the outer surface of the body (2) to enter into the body (2); at least one air duct (5) located on the air inlet (4) to extend longitudinally between the air inlet (4) and the engine (3), and enabling the air from the atmosphere to pass through the air inlet (4) and to be transmitted to the engine (3); a plurality of panels (6) with radar absorbing material properties, which are located in the air duct (5) between the air inlet (4) and the engine (3), and provide absorption when electromagnetic waves contact thereon. In order to absorb electromagnetic waves, the panels are located in front of the engine (3) within the air duct (5), thereby providing absorption before the air flow reaches the engine (3).

It comprises the panel (6) in which a distance between the two panels (6) located closest to the center of the air duct (5) and opposite each other is greater than a distance between the other panels (6) located further from the other air duct (5), and in which a distance between the panels (6) decreases from the center of the air duct (5) towards the wall of the air duct (5); and the structure (7) formed by the panels (6). It comprises the panels (6) located to divide the air duct (2) into two equal parts, one part of which is on one side of the center of the air duct (5) and the other part of which is on the other part of the air duct (5), mirror symmetrically and opposite each other. A distance between the panels (6) close to the walls of the air duct (5) that are on one side of the center line dividing the air duct (5) into two equal parts, is less than a distance between the two panels (6) located at the center of the air duct (5). An air flow between the two panels (6) located at the center of the air duct (5) is higher than an air flow between the other consecutive panels (6). A distance between the panels (5) close to the wall of the air duct (5) can be equal.

In an embodiment of the invention, the air vehicle (1) comprises the panel (6) in which a distance between two consecutive panels (6) located depending on the air flow direction increases from the wall of the air duct (5) to the center of the air duct (5), and decreases from the center of the air duct (5) to the wall of the air duct (5), thereby allowing absorption of electromagnetic waves before contacting the engine (3), and increasing aerodynamic performance. From the center of the air duct (5) towards the perimeter of the air duct (5), a distance between consecutive panels (6) relative to the center of the air duct (5) decreases from the center of the air duct (5) to the wall of the air duct (5). Therefore, a distance between the panels (6) increases from the wall of the air duct (5) to the center of the air duct (5).

In an embodiment of the invention, the air vehicle (1) comprises the panel (6) located between the engine (3) and the air inlet (4) and arranged consecutively towards the air flow direction, almost completely parallel to the air flow direction, wherein the panel (6) extends between an inner wall of the air duct (5) and another opposite inner wall in contact with each other, thus allowing absorption of electromagnetic waves before contacting the engine (3). It comprises the panel (6) extending longitudinally in the air duct (5) in a vertical and/or horizontal position relative to the center of the air duct (5). It comprises the panel (6) with at least one end in contact with the wall of the air duct (5), and the other end opposite the other contact part, thus extending almost completely parallel to the center line of the air duct (5).

In an embodiment of the invention, the air vehicle (1) comprises the panels (6) which are located opposite each other and closest to the center of the air duct (5), and which widen from the air inlet (4) towards the engine (3) so as to direct the air towards the engine (3). An air flow or air density between the two panels (6) located at the center of the air duct (5) is greater than an air flow or air density between the other two consecutive panels (6). Therefore, thanks to the panels (6) that are curved with a gradually widening form from the air inlet (4) to the engine (3), the air flow moves by widening from the air inlet (4) to the engine (3).

In an embodiment of the invention, the air vehicle (1) comprises the panels (6) which are located consecutively and closest to the wall of the air duct (5), and which narrow from the air inlet (4) towards the engine (3) so as to direct the air towards the wall of the air duct (5). The panels (6) located close to the wall of the air duct (5), unlike the panels (6) located close to the center of the air duct (5), direct the air towards the wall of the air duct (5) between two consecutive panels (6).

In an embodiment of the invention, the air vehicle (1) comprises the panels (6) which are located consecutively between center of the air duct (5) and wall of the air duct (5), and which direct the air towards the engine (3) such that a flow rate of the air that first contacts thereon and a flow rate of the air that contacts thereon last are almost exactly close to each other. Except for the panels (6) located at the center of the air duct (5), an air flow rate where the air passing between consecutive panels (6) located between the air duct (5) center and the air duct (5) wall first contacts the panel (6), and an air flow rate where it last contacts are almost completely close to each other. Thus, aerodynamic performance is affected at a minimum level.

In an embodiment of the invention, the air vehicle (1) comprises the panel (6) extending perpendicularly from the wall of the air duct (5) to the center of the air duct (5). It comprises the panel (6) located in the air duct (5) and extending outward from the wall of the air duct (5) towards the center of the air duct (5). Therefore, the panels (6) arranged radially can absorb electromagnetic waves.

In an embodiment of the invention, the air vehicle (1) comprises the panel (6) with a dimension decreasing from the center of the air duct (5) towards the wall of the air duct (5); the structure (7) formed by the panels (6) that are produced to be form-compatible with the wall of the air duct (5), so as to contact the inner wall of the air duct (5). Since the air duct (5) has a cylindrical form, dimensions of the panels (6) decrease from the center of the air duct (5) towards the wall of the air duct (5).

In an embodiment of the invention, the air vehicle (1) comprises the panel (6) located horizontally and/or vertically relative to the center of the air duct (5); the structure (7) thus providing horizontal and/or vertical polarization. It comprises the structure (7) which is thus formed by panels (6) extending in the air duct (5) almost completely perpendicular and/or parallel to the air flow direction.

In an embodiment of the invention, the air vehicle (1) comprises at least one dielectric material (8) forming the panel (6); at least one thin film (9) coated on the dielectric material (8) with a surface resistance close to an impedance value of air; the panel (6) with Salisbury screen radar absorber design consisting of the dielectric material (8) and the thin film (9). It comprises the thin film (9) located on both surfaces of the dielectric material (8).

In an embodiment of the invention, the air vehicle (1) comprises the panel (6) with a wall thickness decreasing from the air inlet (4) towards the engine (3), thus increasing aerodynamic efficiency. Thus, while the electromagnetic wave is absorbed, the decrease in aerodynamic efficiency is prevented.

In an embodiment of the invention, the air vehicle (1) comprises the panel (6) produced integrally with the air duct (5) by an additive manufacturing method. Therefore, a monolithic air duct (5) design is provided.

In an embodiment of the invention, the air vehicle (1) comprises the panel (6) that is removably attached to the air duct (5), thus providing ease of replacement. It comprises the panel (6) that can be easily removed or installed when replacement is required.

In an embodiment of the invention, the air vehicle (1) comprises the panel (6) in an "S" shape, thus enabling absorption of electromagnetic waves by hitting a plurality of surfaces. Thanks to the panel (6) with a curved surface, electromagnetic waves can be absorbed by hitting several surfaces.

In an embodiment of the invention, the air vehicle (1) comprises the panel (6) suitable for use in a fighter aircraft with jet engines.

## Claims

1. An air vehicle (1) comprising a body (2); at least one engine (3) on the body (2) for generating a power required for the flight of the air vehicle; at least one air inlet (4) located as an opening on the body (2) and allowing air entry from the atmosphere; at least one air duct (5) located on the air inlet (4) and transmitting the air received from the air inlet (4) to the engine (3); a plurality of panels (6) with radar absorbing material properties, which are located in the air duct (5) and allow absorption of electromagnetic waves contacting their surfaces, **characterized by** at least one structure (7) formed by the panels (6) in which a distance between the panels (6) that are located in the air duct (5) closest to the center of the air duct (5), opposite each other and mirror symmetrical with respect to the center of the air duct (5), is greater than a distance between other panels (6).

2. An air vehicle (1) according to claim 1, wherein a distance between two consecutive panels (6) located along the air flow direction increases from the wall of the air duct (5) to the center of the air duct (5), and decreases from the center of the air duct (5) to the wall of the air duct (5), thereby allowing absorption of electromagnetic waves before contacting the engine (3), and increasing aerodynamic performance.

3. An air vehicle (1) according to claim 1 or claim 2, comprising a panel (6) located between the engine (3) and the air inlet (4) and arranged consecutively towards the air flow direction, almost completely parallel to the air flow direction, and extending between an inner wall of the air duct (5) and another opposite inner wall in contact with each other, thus allowing absorption of electromagnetic waves before contacting the engine (3).

4. An air vehicle (1) according to any of the above claims, comprising panels (6) which are located opposite each other and closest to the center of the air duct (5), and which widen from the air inlet (4) towards the engine (3) so as to direct the air towards the engine (3).

5. An air vehicle (1) according to any of the above claims, comprising panels (6) which are located consecutively and closest to the wall of the air duct (5), and which narrow from the air inlet (4) towards the engine (3) so as to direct the air towards the wall of the air duct (5).

6. An air vehicle (1) according to any of the above claims, comprising panels (6) which are located consecutively between center of the air duct (5) and wall of the air duct (5), and which direct the air towards the engine (3) such that a flow rate of the air that first contacts thereon and a flow rate of the air that contacts thereon last are almost exactly close to each other.

7. An air vehicle (1) according to any of the above claims, comprising a panel (6) extending perpendicularly from the wall of the air duct (5) to the center of the air duct (5).

8. An air vehicle (1) according to any of the above claims, comprising a panel (6) with a dimension decreasing from the center of the air duct (5) towards the wall of the air duct (5); wherein the structure (7) formed by the panels (6) is produced to be form-compatible with the wall of the air duct (5), so as to contact the inner wall of the air duct (5).

9. An air vehicle (1) according to any of the above claims, comprising a panel (6) located horizontally and/or vertically relative to the center of the air duct (5); the structure (7) thus providing horizontal and/or vertical polarization.

10. An air vehicle (1) according to any of the above claims, **characterized by** at least one dielectric material (8) forming each panel (6); at least one thin film (9) coated on the dielectric material (8) with a surface resistance close to an impedance value of air; each panel (6) being of a Salisbury screen radar absorber design consisting of the dielectric material (8) and the thin film (9).

11. An air vehicle (1) according to any of the above claims, comprising a panel (6) with a wall thickness decreasing from the air inlet (4) towards the engine (3), thus increasing aerodynamic efficiency.

12. An air vehicle (1) according to any of the above claims, comprising a panel (6) produced integrally with the air duct (5) by an additive manufacturing method.

13. An air vehicle (1) according to any of the claims 1 to 11, comprising a panel (6) that is removably attached to the air duct (5), thus providing ease of replacement.

14. An air vehicle (1) according to any of the above claims, comprising a panel (6) in an "S" shape, thus enabling absorption of electromagnetic waves by hitting a plurality of surfaces.

15. An air vehicle (1) according to any of the above claims, comprising a panel (6) suitable for use in a fighter aircraft with jet engines.

## Patentansprüche

1. Luftfahrzeug (1), umfassend: einen Rumpf (2); mindestens ein Triebwerk (3) am Rumpf (2) zur Erzeugung der für den Flug des Luftfahrzeugs erforderlichen Leistung; mindestens ein Lufteinlass (4) als Öffnung am Rumpf (2), der den Eintritt von Luft aus der Atmosphäre ermöglicht; mindestens ein Luftkanal (5) am Lufteinlass (4), der die vom Lufteinlass (4) aufgenommene Luft zum Triebwerk (3) leitet; mehrere Paneele (6) mit radarabsorbierenden Materialeigenschaften, die sich im Luftkanal (5) befinden und die Absorption elektromagnetischer Wellen ermöglichen, die auf ihre Oberflächen treffen, **dadurch gekennzeichnet, dass** mindestens eine durch die Paneele (6) gebildete Struktur (7) vorgesehen ist, wobei ein Abstand zwischen denjenigen Paneelen (6), die im Luftkanal (5) der Mitte des Luftkanals (5) am nächsten angeordnet sind, einander gegenüberliegen und spiegelsymmetrisch zur Mitte des Luftkanals (5) angeordnet sind, größer ist als der Abstand zwischen den übrigen Paneelen (6).

2. Ein Luftfahrzeug (1) nach Anspruch 1, **dadurch gekennzeichnet, dass** bei dem der Abstand zwischen zwei aufeinanderfolgenden, in Strömungsrichtung angeordneten Paneelen (6) von der Wand des Luftkanals (5) zur Mitte des Luftkanals (5) zunimmt und von der Mitte des Luftkanals (5) zur Wand des Luftkanals (5) abnimmt, sodass elektromagnetische Wellen absorbiert werden, bevor sie das Triebwerk (3) erreichen, wobei gleichzeitig die aerodynamische Leistung erhöht wird.

3. Ein Luftfahrzeug (1) nach Anspruch 1 oder 2, umfassend ein Paneel (6), das zwischen dem Triebwerk (3) und dem Lufteinlass (4) angeordnet ist und in Richtung des Luftstroms nahezu vollständig parallel zur Luftstromrichtung verläuft und sich zwischen zwei gegenüberliegenden Innenwänden des Luftkanals (5) erstreckt, sodass elektromagnetische Wellen absorbiert werden, bevor sie das Triebwerk (3) erreichen.

4. Ein Luftfahrzeug (1) nach einem der vorstehenden Ansprüche, umfassend Paneele (6), die einander gegenüberliegen und dem Mittelpunkt des Luftkanals (5) am nächsten liegen und sich vom Lufteinlass (4) zum Triebwerk (3) hin verbreitern, um die Luft zum Triebwerk (3) zu lenken.

5. Ein Luftfahrzeug (1) nach einem der vorstehenden Ansprüche, umfassend Paneele (6), die aufeinanderfolgend und am nächsten an der Wand des Luftkanals (5) angeordnet sind und sich vom Lufteinlass (4) zum Triebwerk (3) hin verjüngen, um die Luft zur Wand des Luftkanals (5) zu lenken.

6. Ein Luftfahrzeug (1) nach einem der vorstehenden Ansprüche, umfassend Paneele (6), die nacheinander zwischen der Mitte des Luftkanals (5) und der Wand des Luftkanals (5) angeordnet sind und die Luft zum Triebwerk (3) lenken, sodass der Volumenstrom der Luft, die zuerst auf diese trifft, und der Volumenstrom der Luft, die zuletzt auf diese trifft, im Wesentlichen gleich sind.

7. Ein Luftfahrzeug (1) nach einem der vorstehenden Ansprüche, umfassend ein Paneel (6), das sich senkrecht von der Wand des Luftkanals (5) bis zur Mitte des Luftkanals (5) erstreckt.

8. Ein Luftfahrzeug (1) nach einem der vorstehenden Ansprüche, umfassend ein Paneel (6), dessen Abmessung von der Mitte des Luftkanals (5) zur Wand des Luftkanals (5) hin abnimmt; wobei die durch die Paneele (6) gebildete Struktur (7) so gefertigt ist, dass sie eine zur Wand des Luftkanals (5) komplementäre Form aufweist und die Innenwand des Luftkanals (5) berührt.

9. Ein Luftfahrzeug (1) nach einem der vorstehenden Ansprüche, umfassend ein Paneel (6), das horizontal und/oder vertikal relativ zur Mitte des Luftkanals (5) angeordnet ist; wobei die Struktur (7) zur Erzeugung einer horizontalen und/oder vertikalen Polarisation ausgebildet ist.

10. Ein Luftfahrzeug (1) nach einem der vorstehenden Ansprüche, **dadurch gekennzeichnet, dass** jedes Paneel (6) aus mindestens einem dielektrischen Material (8) besteht; mindestens ein dünner Film (9) auf dem dielektrischen Material (8) aufgebracht ist, dessen Oberflächenwiderstand nahe dem Impedanzwert von Luft liegt; wobei jedes Paneel (6) als Radarabsorberstruktur vom Salisbury-Typ ausgeführt ist und aus dem dielektrischen Material (8) und dem dünnen Film (9) besteht.

11. Ein Luftfahrzeug (1) nach einem der vorstehenden Ansprüche, umfassend ein Paneel (6) mit einer Wandstärke, die vom Lufteinlass (4) zum Triebwerk (3) hin abnimmt und dadurch die aerodynamische Effizienz erhöht.

12. Ein Luftfahrzeug (1) nach einem der vorstehenden Ansprüche, umfassend ein Paneel (6), das durch ein additives Fertigungsverfahren integral mit dem Luftkanal (5) hergestellt ist.

13. Ein Luftfahrzeug (1) nach einem der Ansprüche 1 bis 11, umfassend ein Paneel (6), das abnehmbar am Luftkanal (5) befestigt ist und dadurch einen erleichterten Austausch ermöglicht.

14. Ein Luftfahrzeug (1) nach einem der vorstehenden Ansprüche, umfassend ein Paneel (6) in S-Form, das die Absorption elektromagnetischer Wellen durch Reflexion an mehreren Oberflächen ermöglicht.

15. Ein Luftfahrzeug (1) nach einem der vorstehenden Ansprüche, umfassend ein Paneel (6), das zur Verwendung in einem Kampfflugzeug mit Strahltriebwerken vorgesehen ist.

## Revendications

1. Véhicule aérien (1) comprenant un corps (2); au moins un moteur (3) disposé sur le corps (2) afin de générer la puissance nécessaire au vol du véhicule aérien; au moins une entrée d'air (4) disposée sous la forme d'une ouverture sur le corps (2) et permettant l'entrée d'air depuis l'atmosphère; au moins un conduit d'air (5) disposé sur l'entrée d'air (4) et transmettant l'air reçu depuis l'entrée d'air (4) vers le moteur (3); une pluralité de panneaux (6) présentant des propriétés de matériau absorbant radar, lesquels sont disposés dans le conduit d'air (5) et permettent l'absorption des ondes électromagnétiques entrant en contact avec leurs surfaces, **caractérisé par** au moins une structure (7) formée par les panneaux (6), dans laquelle une distance entre les panneaux (6) disposés dans le conduit d'air (5), les plus proches du centre du conduit d'air (5), opposés l'un à l'autre et symétriques par rapport au centre du conduit d'air (5), est supérieure à la distance entre les autres panneaux (6).

2. Véhicule aérien (1) selon la revendication 1, dans lequel une distance entre deux panneaux consécutifs (6) disposés selon la direction d'écoulement de l'air augmente depuis la paroi du conduit d'air (5) vers le centre du conduit d'air (5), et diminue depuis le centre du conduit d'air (5) vers la paroi du conduit d'air (5), permettant ainsi l'absorption des ondes électromagnétiques avant qu'elles n'atteignent le moteur (3), et augmentant les performances aérodynamiques.

3. Véhicule aérien (1) selon la revendication 1 ou la revendication 2, comprenant un panneau (6) disposé entre le moteur (3) et l'entrée d'air (4), agencé consécutivement selon la direction d'écoulement de l'air, presque entièrement parallèle à ladite direction d'écoulement de l'air, et s'étendant entre deux parois internes opposées du conduit d'air (5), permettant ainsi l'absorption des ondes électromagnétiques avant qu'elles n'atteignent le moteur (3).

4. Véhicule aérien (1) selon l'une quelconque des revendications précédentes, comprenant des panneaux (6) disposés en vis-à-vis et les plus proches du centre du conduit d'air (5), lesquels présentent une largeur augmentant depuis l'entrée d'air (4) vers le moteur (3) afin de diriger l'air vers le moteur (3).

5. Véhicule aérien (1) selon l'une quelconque des revendications précédentes, comprenant des panneaux (6) disposés consécutivement et les plus proches de la paroi du conduit d'air (5), lesquels présentent une largeur décroissante depuis l'entrée d'air (4) vers le moteur (3) afin de diriger l'air vers la paroi du conduit d'air (5).

6. Véhicule aérien (1) selon l'une quelconque des revendications précédentes, comprenant des panneaux (6) disposés consécutivement entre le centre du conduit d'air (5) et la paroi du conduit d'air (5), et dirigeant l'air vers le moteur (3) de sorte qu'un débit d'air entrant en premier en contact avec ceux-ci et un débit d'air entrant en dernier en contact avec ceux-ci soient sensiblement égaux.

7. Véhicule aérien (1) selon l'une quelconque des revendications précédentes, comprenant un panneau (6) s'étendant perpendiculairement depuis la paroi du conduit d'air (5) vers le centre du conduit d'air (5).

8. Véhicule aérien (1) selon l'une quelconque des revendications précédentes, comprenant un panneau (6) présentant une dimension décroissante depuis le centre du conduit d'air (5) vers la paroi du conduit d'air (5); dans lequel la structure (7) formée par les panneaux (6) est réalisée de manière à présenter une forme complémentaire à celle de la paroi du conduit d'air (5), de façon à entrer en contact avec la paroi interne du conduit d'air (5).

9. Véhicule aérien (1) selon l'une quelconque des revendications précédentes, comprenant un panneau (6) disposé horizontalement et/ou verticalement par rapport au centre du conduit d'air (5) ; ladite structure (7) étant configurée pour assurer une polarisation horizontale et/ou verticale.

10. Véhicule aérien (1) selon l'une quelconque des revendications précédentes, **caractérisé en ce qu'**il comprend au moins un matériau diélectrique (8) formant chaque panneau (6) ; au moins un film mince (9) revêtu sur le matériau diélectrique (8), présentant une résistance surfacique proche de l'impédance de l'air ; chaque panneau (6) étant réalisé sous la forme d'une structure absorbante radar de type écran de Salisbury constituée du matériau diélectrique (8) et du film mince (9).

11. Véhicule aérien (1) selon l'une quelconque des revendications précédentes, comprenant un panneau (6) présentant une épaisseur décroissante depuis l'entrée d'air (4) vers le moteur (3), augmentant ainsi l'efficacité aérodynamique.

12. Véhicule aérien (1) selon l'une quelconque des revendications précédentes, comprenant un panneau (6) réalisé monobloc avec le conduit d'air (5) au moyen d'un procédé de fabrication additive.

13. Véhicule aérien (1) selon l'une quelconque des revendications 1 à 11, comprenant un panneau (6) fixé de manière démontable au conduit d'air (5), permettant ainsi une facilité de remplacement.

14. Véhicule aérien (1) selon l'une quelconque des revendications précédentes, comprenant un panneau (6) présentant une forme en « S », de manière à permettre l'absorption des ondes électromagnétiques par réflexion sur une pluralité de surfaces.

15. Véhicule aérien (1) selon l'une quelconque des revendications précédentes, comprenant un panneau (6) destiné à être utilisé dans un aéronef de combat équipé de moteurs à réaction.
